# EUROPEAN PATENT SPECIFICATION

(11) **EP 3 715 924 B1**
(45) Date of publication and mention of the grant of the patent: **04.05.2022**
(21) Application number: 18919915.1
(22) Date of filing: 29.08.2018
(51) Int. Cl.: G02B 6/024, G02B 6/036, G02B 6/02, C03B 37/012, C03C 25/10, C03C 25/1065

(54) **POLARIZATION MAINTAINING OPTICAL FIBER**
POLARISATIONSERHALTENDE OPTISCHE FASER
FIBRE OPTIQUE À MAINTIEN DE POLARISATION

(30) Priority: 22.05.2018 CN 201810526552
(43) Date of publication of application: 30.09.2020
(73) Proprietor: Fiberhome Telecommunication Technologies Co., Ltd, Wuhan, Hubei 430000 (CN); Ruiguang Telecommunication Technologies Co., Ltd, Wuhan, Hubei 430000 (CN)
(72) Inventor: LUO, Wenyong, Wuhan, Hubei 430000 (CN); ZHAO, Zisen, Wuhan, Hubei 430000 (CN); QI, Wei, Wuhan, Hubei 430000 (CN); KE, Yili, Wuhan, Hubei 430000 (CN); DU, Cheng, Wuhan, Hubei 430000 (CN); ZHANG, Tao, Wuhan, Hubei 430000 (CN); WANG, Bi, Wuhan, Hubei 430000 (CN)
(74) Representative: Oberdorfer, Jürgen
(86) International application number: PCT/CN2018/102933
(87) International publication number: WO 2019/223160

(56) References cited:
- CN-A- 102 253 445
- CN-A- 103 018 821
- CN-A- 103 323 910
- CN-A- 104 932 052
- CN-A- 107 884 873
- JP-A- S6 045 210
- US-A1- 2005 226 580

## Description

### Field of the Invention

The invention relates to the field of optical fibers, in particular to a polarization maintaining optical fiber.

### Background of the Invention

Compared with other types of gyroscopes, fiber-optic gyroscopes have many advantages such as short startup time, simple structure, light weight, no moving components, and strong environmental adaptability, etc. In recent years, the fiber-optic gyroscopes have developed very rapidly and widely used in many fields such as navigation system and motion detection of aircraft, automobile and ship. With the development of accuracy improvement and structure miniaturization, the fiber-optic gyroscopes have gradually become a key inertial component of various high-tech navigation and positioning.

The common fiber-optic gyroscope is composed of two parts: optical head and circuit. The optical head consists of a light source, an optical waveguide, a coupler, an optical fiber sensor, and a detector. The optical head is the key to the sensitive angular velocity and is the core part of the fiber-optic gyroscope. In the optical head, the optical fiber ring made by winding a polarization maintaining optical fiber is the most sensitive unit in the fiber-optic gyroscope. The performance of the optical fiber ring determines the performance of the fiber-optic gyroscope.

Polarization Maintaining Optical Fiber (PMF) is a special optical fiber that achieves the single-mode transmission characteristics of light while maintaining its linear polarization state. Because the polarization maintaining optical fiber has a stress birefringence effect, the polarization maintaining optical fiber can maintain a good polarization state when transmitting a linearly polarized light. The linear polarization-maintaining capability of the polarization maintaining optical fiber is useful in many polarization-related applications, such as multidimensional multiplexed coherent communication, fiber-optic gyroscope technology, current mutual inductance technology, fiber-optic hydrophones, and polarization sensing.

With the development of the fiber-optic gyroscopes towards high precision and miniaturization, as an indispensable key component in the fiber-optic gyroscope system, the polarization maintaining optical fiber is urgently needed to develop towards fine core diameter, high precision, large length, high stability and environmental adaptability, so it is inevitable that the polarization maintaining optical fibers will have smaller diameter.

At present, there exists fine-diameter polarization maintaining optical fibers on the market, such as a fine-diameter polarization maintaining optical fiber provided by Patent Publication No. CN104536085B, however, it still has a problem that the optical fibers are greatly affected by environmental performance. It is difficult to meet the fiber-optic gyroscope development requirements of miniaturization and high precision at the same time, and cannot meet the growing needs of fiber-optic gyroscopes.

US2005/0226580A1 discloses an optical fiber, comprising a core having an outer region disposed about an inner region and an intensity profile having a highest intensity that is less than the highest intensity of a Gaussian intensity profile that is normalized to have the same power as the intensity profile. The outer region can comprise an index of refraction that is greater than an index of refraction comprised by the inner region. The outer region can comprise a first concentration of a selected rare earth and any concentration of the selected rare earth comprised by the inner region can be less than the selected concentration. The inner region can include first and second rare earths and the outer region can be photosensitive. A second cladding can be included. A fiber according to the invention can be birefringent and can include, for example, at least one longitudinally extending stress including region for creating birefringence.

### Summary of the Invention

In view of the defects existing in the prior art, the technical problem to be solved by the present invention is to provide a polarization maintaining optical fiber, which provides more stable and higher crosstalk output performance and optical fiber attenuation performance.

In order to achieve the above purpose, the present invention adopts the technical solution provided by the independent claim. Different embodiments are set out in the dependent claims.

### Description of the Drawings

Fig. 1 is a schematic diagram of a transverse section of the polarization maintaining optical fiber in the embodiment of the present invention;
Fig. 2 is a schematic diagram of a transverse refractive index of the polarization maintaining optical fiber in the embodiment of the present invention.

In the figures: 1-fiber core, 10-central core region, 11-annular region, 2-quartz cladding layer, 3-inner coating layer, 30-the first inner coating layer, 31-the second inner coating layer, 4-outer coating layer, 40-the first outer coating layer, 41-the second outer coating layer, 5-stress zone.

### Detailed Description of the Embodiments

The present invention will be further described below in detail with reference to the drawings in combination with the embodiments.

It should be noted that, in the case of no conflict, the embodiments and the features in the embodiments in the present invention can be combined with each other. In the following, the technical solutions in the embodiments of the present invention will be clearly and completely described with reference to the drawings in the embodiments of the present invention. Obviously, the described embodiments are only a part of the embodiments of the present invention, not all of the embodiments. The following description of at least one exemplary embodiment is actually merely illustrative and in no way serves as any limitation on the present invention and its application or use. Based on the embodiments in the present invention, all other embodiments obtained by common technical personnel in the technical field without creative efforts shall fall within the protection scope of the present invention.

### Embodiment 1

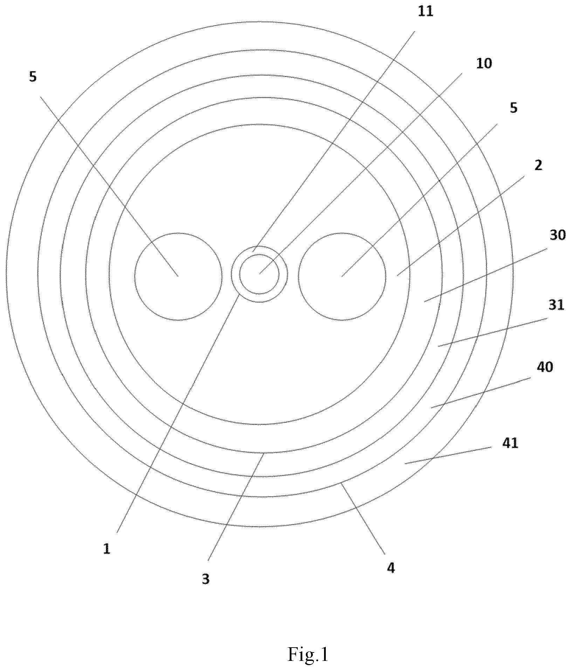

As shown in Fig. 1, the embodiment of the present invention provides a polarization maintaining optical fiber, which comprises, in order from the inside to the outside, a fiber core 1, a quartz cladding layer 2, an inner coating layer 3 and an outer coating layer 4. The quartz cladding layer 2 is located at the periphery of the fiber core 1, two stress zones 5 are provided between the quartz cladding layer 2 and the fiber core 1, and the two stress zones 5 are symmetrically distributed along the center of the fiber core 1.

The fiber core 1 comprises, in order from the inside to the outside, a circular central core region 10 and at least one annular region 11 concentrically arranged with the central core region 10, and the refractive indexes of the central core region 10 and the annular region 11 are different.

The inner coating layer 3 and the outer coating layer 4 are both of a double-layer structure, the modulus of each layer of the inner coating layer 3 and the outer coating layer 4 is different, and the modulus from the inside to the outside increases sequentially.

In the polarization maintaining optical fiber of the present invention, the fiber core 1 comprises, in order from the inside to the outside, a circular central core region 10 and at least one annular region 11 arranged concentrically with the central core region 10, so that the mode characteristics of the optical signal transmitted by the polarization maintaining optical fiber tend to be intermediate, so the side lobes of the Gaussian mode are reduced, thereby reducing the effect of mode changes caused by external interference after the coating is thinned. Meanwhile, the inner coating layer 3 and the outer coating layer 4 are both of a double-layer structure, the modulus of each layer of the inner coating layer 3 and the outer coating layer 4 is different, and the modulus successively increases from the inside to the outside. On the one hand, it can fully use the extremely soft inner coating layer to buffer external interference, and the extremely hard outer layer to resist external interference. On the other hand, it can avoid the problem of reliability reduction caused by the mismatch of modulus when using the extremely soft inner layer and the extremely hard outer layer directly, thereby laying a good foundation for the long-term reliability use of the polarization maintaining optical fiber with thin coating layer; thereby making the polarization maintaining optical fiber have more stable and higher crosstalk output performance and fiber attenuation performance.

### Embodiment 2

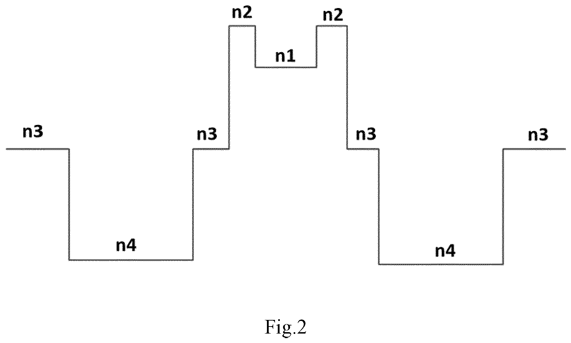

As shown in Fig. 2, the difference between this embodiment and Embodiment 1 is that the refractive index of the central core region 10 is n1, the refractive index of the annular region 11 is n2, the refractive index of the quartz cladding layer 2 is n3, the refractive index of the stress region 5 is n4, and n4<n3<n1<n2.

The refractive index of the central core region 10 relative to the quartz cladding layer 2 is △n1, the refractive index of the annular region 11 relative to the quartz cladding layer 2 is △n2, and △n1<△n2, wherein the value of △n1 ranges from 0.4% to 1.3%, and the value of △n2 ranges from 0.6% to 1.5%.

In the embodiment of the present invention, the refractive index n1 of the central core region 10 is smaller than the refractive index n2 of the annular region 11, that is, the fiber core forms a U-shaped structure design, so that the mode characteristics of the optical signal transmitted by the polarization maintaining optical fiber tend to be intermediate, which reduce the side lobes of the Gaussian mode, thereby reducing the effect of mode changes caused by external interference after the coating layer is thinned.

### Embodiment 3

The difference between this embodiment and Embodiment 1 is that the diameter of the central core region 10 is d1, the outer diameter of the annular region 11 is d2, the diameter of the stress zone 5 is d3, and the outer diameter of the quartz cladding layer 2 is d4, and d1 <d2 <d3 <d4. The value of d1 ranges from 4.0 µ m to 5.0 µ m, the value of d2 ranges from 5.0 µ m to 6.0 µ m, the value of d3 ranges from 22.0 µ m to 26.0 µ m, and the value of d4 ranges from 79.0 µ m to 81.0 µ m. Preferably, the outer diameter of the quartz cladding layer 2 is 80 µ m.

### Embodiment 4

The difference between this embodiment and Embodiment 1 is that the material of the stress zone 5 is boron trioxide-doped quartz material, and the concentration of the boron trioxide doped in the stress zone 5 ranges from 1%mol to 3%mol.

The central core region 10 and the annular region 11 are both made of germanium-doped quartz material, and the concentration of germanium doped in the central core region 10 is different from that in the annular region 11.

### Embodiment 5

The inner coating layer 3 comprises, in order from the inside to the outside, a first inner coating layer 30 and a second inner coating layer 31; and the outer coating layer 4 comprises, in order from the inside to the outside, a first outer coating layer 40 and a second outer coating layer 41. The inner coating layer 3 and the outer coating layer 4 are both polyacrylic resin coating layers.

The modulus of the first inner coating layer 30 is 0.6Mpa to 1.2Mpa, the modulus of the second inner coating layer 31 is 1.5Mpa to 10Mpa, the modulus of the first outer coating layer 40 is 450Mpa to 650Mpa, and the modulus of the second outer coating layer 41 is 1200Mpa to1980Mpa.

The diameter of the first inner coating layer 30 is d5, the diameter of the second inner coating layer 31 is d6, the diameter of the first outer coating layer 40 is d7, and the diameter of the second outer coating layer 41 is d8. The value of d5 ranges from 90.0 µm to 95.0 µm, the value of d6 ranges from 100.0 µm to 105.0 µm, the value of d7 ranges from 110.0 µm to 115.0 µm, and the value of d8 ranges from 127.0 µm to 133.0 µm. Preferably, the outer diameter of the second outer coating layer 41 is 130 µ m.

In the embodiment of the present invention, the first inner coating layer 30 with the innermost layer can use the inner coating with the modulus as low as IMPa, and the second outer coating layer 41 can use an extremely high modulus of nearly 2 GPa. On the one hand, it can fully use the extremely soft inner coating layer to buffer external interference, and the extremely hard outer layer to resist external interference. On the other hand, it can avoid the problem of reliability reduction caused by the mismatch of modulus when using the extremely soft inner layer and the extremely hard outer layer directly, thereby laying a good foundation for the long-term reliability use of the polarization maintaining optical fiber with thin coating layer.

### Embodiment 6 (Performance example not forming part of the invention)

When the working wavelength of the polarization maintaining optical fiber is 1310nm, cutoff wavelength is 1050nm to 1270nm, beat length≤3mm, polarization crosstalk≤-25.0dB/km, mode field diameter is 5.5µm to 6.5µm, fiber loss<0.6dB/km, bending loss<0.1dB when bending radius is 15mm and the number of bending turns is 20, core-cladding concentricity≤0.5µm, cladding non-circularity≤2.0%, screening intensity is 100kpsi, working temperature ranges from -55 °C to 85 °C, and full temperature crosstalk variation≤3dB.

When the working wavelength of the polarization maintaining optical fiber is 1550nm, cutoff wavelength is 1300nm to 1500nm, beat length≤4mm, polarization crosstalk≤-25.0dB/km, mode field diameter is 6.5 µm to 7.0 µm, fiber loss<0.6dB/km, bending loss<0.1dB when bending radius is 15mm and the number of bending turns is 20, core-cladding concentricity≤0.5µm, cladding non-circularity≤2.0%, screening strength is 100kpsi, working temperature ranges from -55 °C to 85 °C, and full temperature crosstalk variation≤3dB.

In this embodiment, the screening rate is 100%, and the full temperature crosstalk variation is the difference between the maximum value of polarization crosstalk and the minimum value of the polarization crosstalk within the range of the full-temperature variation from -55°C to 85°C when the length is 500m.

### Embodiment 7

The diameter of the central core region 10 is d1. The outer diameter of the annular region 11 is d2. The diameter of the stress zone 5 is d3. The outer diameter of the quartz cladding layer 2 is d4. The diameter of the first inner coating layer 30 is d5. The diameter of the second inner coating layer 31 is d6. The diameter of the first outer coating layer 40 is d7. The diameter of the second outer coating layer 41 is d8. The concentration of boron trioxide doped in the stress zone 5 is N. The refractive index of the central core region 10 relative to the quartz cladding layer 2 is △n1. The refractive index of the annular region 11 relative to the quartz cladding layer 2 is △n2. The modulus of the first inner coating layer 30 is M1. The modulus of the second inner coating layer 31 is M2. The modulus of the first outer coating layer 40 is M3. The modulus of the second outer coating layer 41 is M4.

The embodiment of the present invention provides the structure and performance parameters of the optical fiber with working wavelength of 1310nm, as shown in Table 1 below. Optical Fibers 2, 6 and 9 do not form part of the invention.

**Table 1 Structure and Performance Parameters of Optical Fiber with Working Wavelength of 1310nm**

| Parameter | Optical Fiber 1 | Optical Fiber 2 | Optical Fiber 3 | Optical Fiber 4 | Optical Fiber 5 | Optical Fiber 6 | Optical Fiber 7 | Optical Fiber 8 | Optical Fiber 9 |
|---|---|---|---|---|---|---|---|---|---|
| d1 µm | 4.0 | 5.0 | 4.0 | 4.2 | 4.5 | 5.0 | 4.0 | 4.5 | 5.0 |
| d2 µm | 5.0 | 6.0 | 5.0 | 5.3 | 5.5 | 6.0 | 5.0 | 5.5 | 6.0 |
| d3 µm | 22.0 | 26.0 | 22.0 | 23.0 | 24.0 | 26.0 | 22.0 | 24.0 | 26.0 |
| d4 µm | 79.0 | 79.0 | 80.0 | 80.0 | 80.0 | 80.0 | 81.0 | 81.0 | 81.0 |
| d5 µm | 90.0 | 95.0 | 90.0 | 92.0 | 93.0 | 95.0 | 90.0 | 93.0 | 95.0 |
| d6 µm | 100.0 | 105.0 | 100.0 | 102.0 | 103.0 | 105.0 | 100.0 | 102.5 | 105.0 |
| d7 µm | 110.0 | 115.0 | 110.0 | 112.0 | 113.0 | 115.0 | 110.0 | 112.5 | 115.0 |
| d8 µm | 127.0 | 127.0 | 127.0 | 130.0 | 130.0 | 130.0 | 133.0 | 133.0 | 133.0 |
| N %mol | 1 | 3 | 1 | 2 | 1.5 | 3 | 1 | 1.5 | 3 |
| Δn1 | 0.5 | 1.3 | 0.5 | 0.8 | 0.9 | 1.0 | 0.6 | 0.78 | 1.3 |
| Δn2 | 0.7 | 1.6 | 0.7 | 0.9 | 1.0 | 1.6 | 0.75 | 1.0 | 1.6 |
| M1 Mpa | 0.6 | 1.2 | 0.6 | 0.8 | 1.0 | 1.2 | 0.6 | 0.8 | 1.2 |
| M2 Mpa | 1.5 | 10 | 1.5 | 2.5 | 5.0 | 10 | 1.5 | 5.0 | 10 |
| M3 Mpa | 450 | 650 | 450 | 500 | 550 | 650 | 450 | 55 | 650 |
| M4 Mpa | 1200 | 1980 | 1200 | 1300 | 1600 | 1980 | 1200 | 1650 | 1980 |
| Cutoff Wavelength | 1051 | 1269 | 1052 | 1100 | 1200 | 1268 | 1053 | 1150 | 1267 |
| Mode Field Diameter | 5.5 | 6.5 | 5.5 | 5.8 | 6.0 | 6.5 | 5.5 | 6.0 | 6.5 |
| Polarization | -26 | -30 | -26 | -28 | -30 | -33 | -26 | -30 | -35 |
| Crosstalk | | | | | | | | | |
| Beat Length mm | 2.5 | 1.5 | 2.8 | 2.2 | 1.8 | 1.2 | 2.7 | 2.0 | 1.5 |
| Core-Cladding Concentricity | 0.2 | 0.3 | 0.2 | 0.3 | 0.4 | 0.3 | 0.2 | 0.3 | 0.4 |
| Cladding Non-circularity % | 1.2 | 0.9 | 0.8 | 0.6 | 0.3 | 1.3 | 1.0 | 0.3 | 0.8 |
| Fiber Loss | 0.35 | 0.55 | 0.33 | 0.40 | 0.50 | 0.56 | 0.32 | 0.41 | 0.52 |
| Bending Loss | 0.05 | 0.02 | 0.08 | 0.06 | 0.05 | 0.02 | 0.02 | 0.06 | 0.09 |
| Screening Intensity | 100 | 100 | 100 | 100 | 100 | 100 | 100 | 100 | 100 |
| Full Temperature Crosstalk Variation | 1.2 | 2.4 | 1.2 | 1.3 | 0.5 | 2.5 | 0.6 | 1.0 | 2.2 |

The optimized polarization maintaining optical fiber in this embodiment has more stable and higher crosstalk output performance and optical fiber attenuation performance.

### Embodiment 8

The diameter of the central core region 10 is d1. The outer diameter of the annular region 11 is d2. The diameter of the stress zone 5 is d3. The outer diameter of the quartz cladding layer 2 is d4. The diameter of the first inner coating layer 30 is d5. The diameter of the second inner coating layer 31 is d6. The diameter of the first outer coating layer 40 is d7. The diameter of the second outer coating layer 41 is d8. The concentration of boron trioxide doped in the stress zone 5 is N. The refractive index of the central core region 10 relative to the quartz cladding layer 2 is △n1. The refractive index of the annular region 11 relative to the quartz cladding layer 2 is △n2. The modulus of the first inner coating layer 30 is M1. The modulus of the second inner coating layer 31 is M2. The modulus of the first outer coating layer 40 is M3. The modulus of the second outer coating layer 41 is M4.

The embodiment of the present invention provides the structure and performance parameters of the optical fiber with working wavelength of 1550nm, as shown in Table 2 below.

**Table 2 Structure and Performance Parameters of Optical Fiber with Working Wavelength of 1550nm**

| Parameter | Optical Fiber 10 | Optical Fiber 11 | Optical Fiber 12 | Optical Fiber 13 | Optical Fiber 14 | Optical Fiber 15 | Optical Fiber 16 | Optical Fiber 17 | Optical Fiber 18 |
|---|---|---|---|---|---|---|---|---|---|
| d1 µm | 4.0 | 5.0 | 4.0 | 4.2 | 4.5 | 5.0 | 4.0 | 4.5 | 5.0 |
| d2 µm | 5.0 | 6.0 | 5.0 | 5.3 | 5.5 | 6.0 | 5.0 | 5.5 | 6.0 |
| d3 µm | 22.0 | 26.0 | 22.0 | 23.0 | 24.0 | 26.0 | 22.0 | 24.0 | 26.0 |
| d4 µm | 79.0 | 79.0 | 80.0 | 80.0 | 80.0 | 80.0 | 81.0 | 81.0 | 81.0 |
| d5 µm | 90.0 | 95.0 | 90.0 | 92.0 | 93.0 | 95.0 | 90.0 | 93.0 | 95.0 |
| d6 µm | 100.0 | 105.0 | 100.0 | 102.0 | 103.0 | 105.0 | 100.0 | 102.5 | 105.0 |
| d7 µm | 110.0 | 115.0 | 110.0 | 112.0 | 113.0 | 115.0 | 110.0 | 112.5 | 115.0 |
| d8 µm | 127.0 | 127.0 | 127.0 | 130.0 | 130.0 | 130.0 | 133.0 | 133.0 | 133.0 |
| N %mol | 1 | 3 | 1 | 2 | 1.5 | 3 | 1 | 1.5 | 3 |
| Δn1 | 0.4 | 1.1 | 0.4 | 0.4 | 0.5 | 1.0 | 0.4 | 0.56 | 1.0 |
| Δn2 | 0.6 | 1.3 | 0.6 | 0.7 | 0.8 | 1.3 | 0.6 | 0.8 | 1.3 |
| M1 Mpa | 0.6 | 1.2 | 0.6 | 0.8 | 1.0 | 1.2 | 0.6 | 0.8 | 1.2 |
| M2 Mpa | 1.5 | 10 | 1.5 | 2.5 | 5.0 | 10 | 1.5 | 5.0 | 10 |
| M3 Mpa | 450 | 650 | 450 | 500 | 550 | 650 | 450 | 55 | 650 |
| M4 Mpa | 1200 | 1980 | 1200 | 1300 | 1600 | 1980 | 1200 | 1650 | 1980 |
| Cutoff Wavelength nm | 1321 | 1489 | 1322 | 1400 | 1420 | 1485 | 1323 | 1410 | 1487 |
| Mode Field Diameter | 6.0 | 7.0 | 6.0 | 6.3 | 6.5 | 7.0 | 6.0 | 6.5 | 7.0 |
| Polarization Crosstalk | -25.3 | -28 | -25.2 | -26 | -26 | -29 | -26 | -27 | -29 |
| Beat Length mm | 3.5 | 2.0 | 3.0 | 2.4 | 2.2 | 1.3 | 3.7 | 3.0 | 2.5 |
| Core-Cladding Concentricity µm | 0.2 | 0.3 | 0.2 | 0.3 | 0.4 | 0.3 | 0.2 | 0.3 | 0.4 |
| Cladding Non-circularity % | 1.2 | 0.9 | 0.8 | 0.6 | 0.3 | 1.3 | 1.0 | 0.3 | 0.8 |
| Fiber Loss | 0.45 | 0.58 | 0.38 | 0.39 | 0.45 | 0.58 | 0.36 | 0.40 | 0.59 |
| Bending Loss | 0.03 | 0.06 | 0.02 | 0.05 | 0.06 | 0.00 | 0.03 | 0.05 | 0.09 |
| Screening Intensity | 100 | 100 | 100 | 100 | 100 | 100 | 100 | 100 | 100 |
| Full Temperature Crosstalk Variation | 1.3 | 2.8 | 1.1 | 1.2 | 0.9 | 2.7 | 0.8 | 1.1 | 2.8 |

The optimized polarization maintaining optical fiber in this embodiment has more stable and higher crosstalk output performance and fiber attenuation performance.

## Claims

1. A polarization maintaining optical fiber, wherein the polarization maintaining optical fiber comprises, in order from the inside to the outside, a fiber core (1), a quartz cladding layer (2), an inner coating layer (3) and an outer coating layer (4); the quartz cladding layer (2) is located at the periphery of the fiber core (1), two stress zones (5) are provided between the quartz cladding layer (2) and the fiber core (1), and the two stress zones (5) are symmetrically distributed along the center of the fiber core (1);
the fiber core (1) comprises, in order from the inside to the outside, a circular central core region (10) and at least one annular region (11) concentrically arranged with the central core region (10), and the refractive indexes of the central core region (10) and the annular region (11) are different;
the inner coating layer (3) and the outer coating layer (4) are both of a double-layer structure, the modulus of each layer of the inner coating layer (3) and the outer coating layer (4) is different, and the modulus from the inside to the outside increases sequentially;
wherein the refractive index of the central core region (10) is n1, the refractive index of the annular region (11) is n2, the refractive index of the quartz cladding layer (2) is n3, the refractive index of the central core region (10) relative to the quartz cladding layer (2) is △n1, and the refractive index of the annular region (11) relative to the quartz cladding layer (2) is △n2, and △n1<△n2, wherein the value of △n1 ranges from 0.4% to 1.3%, and the value of △n2 ranges from 0.6% to 1.5%;
wherein the diameter of the central core region (10) is d1, the outer diameter of the annular region (11) is d2, the diameter of the stress zone (5) is d3, the outer diameter of the quartz cladding layer (2) is d4, and d1 <d2 <d3 <d4, wherein the value of d1 ranges from 4.0 µ m to 5.0 µ m, the value of d2 ranges from 5.0 µ m to 6.0 µ m, the value of d3 ranges from 22.0 µ m to 26.0 µ m, and the value of d4 ranges from 79.0 µ m to 81.0 µ m.

2. The polarization maintaining optical fiber according to claim 1, wherein the material of the stress zone (5) is boron trioxide-doped quartz material, wherein the concentration of the boron trioxide doped in the stress zone (5) ranges from 1%mol to 3%mol.

3. The polarization maintaining optical fiber according to claim 1, wherein the central core region (10) and the annular region (11) are both made of germanium-doped quartz material, and the concentration of the germanium doped in the central core region (10) is different from that in the annular region (11).

4. The polarization maintaining optical fiber according to claim 1, wherein the inner coating layer (3) comprises, in order from the inside to the outside, a first inner coating layer (30) and a second inner coating layer (31); the outer coating layer (4) comprises, in order from the inside to the outside, a first outer coating layer (40) and a second outer coating layer (41).

5. The polarization maintaining optical fiber according to claim 4, wherein the modulus of the first inner coating layer (30) is 0.6Mpa to 1.2Mpa, the modulus of the second inner coating layer (31) is 1.5Mpa to 10Mpa, the modulus of the first outer coating layer (40) is 450Mpa to 650Mpa, and the modulus of the second outer coating layer (41) is 1200Mpa to 1980Mpa.

6. The polarization maintaining optical fiber according to claim 4, wherein the diameter of the first inner coating layer (30) is d5, the diameter of the second inner coating layer (31) is d6, the diameter of the first outer coating layer (40) is d7, and the diameter of the second outer coating layer (41) is d8, wherein the value of d5 ranges from 90.0 µ m to 95.0 µ m, the value of d6 ranges from 100.0 µ m to 105.0 µ m, the value of d7 ranges from 110.0 µ m to 115.0 µ m, and the value of d8 ranges from 127.0 µ m to 133.0 µm.

## Patentansprüche

1. Polarisationserhaltende optische Faser, wobei die polarisationserhaltende optische Faser aufweist, in der Reihenfolge von innen nach außen: einen Faserkern (1), eine Quarz-Mantelschicht (2), eine innere Beschichtungsschicht (3) und eine äußere Beschichtungsschicht (4); wobei sich die Quarz-Mantelschicht (2) an der Peripherie des Faserkerns (1) befindet, zwei Belastungszonen (5) zwischen der Quarz-Mantelschicht (2) und dem Faserkern (1) vorhanden sind, und die zwei Belastungszonen (5) entlang der Mitte des Faserkerns (1) symmetrisch verteilt sind; wobei der Faserkern (1) aufweist, in der Reihenfolge von innen nach außen: einen kreisrunden Mittelkernbereich (10) und zumindest einen ringförmigen Bereich (11), der zu dem Mittelkernbereich (10) konzentrisch angeordnet ist, und wobei die Brechungsindizes des Mittelkernbereichs (10) und des ringförmigen Bereichs (11) unterschiedlich sind;
wobei die innere Beschichtungsschicht (3) und die äußere Beschichtungsschicht (4) beide eine doppelschichtige Struktur aufweisen, wobei der Modul jeder Schicht der inneren Beschichtungsschicht (3) und der äußeren Beschichtungsschicht (4) unterschiedlich ist, und wobei der Modul von innen nach außen sequentiell zunimmt;
wobei der Brechungsindex des Mittelkernbereichs (10) n1 ist, der Brechungsindex des ringförmigen Bereichs (11) n2 ist, der Brechungsindex der Quarz-Mantelschicht (2) n3 ist, der Brechungsindex des Mittelkernbereichs (10) in Bezug zu der Quarz-Mantelschicht (2) Δn1 ist und der Brechungsindex des ringförmigen Bereichs (11) in Bezug zu der Quarz-Mantelschicht (2) Δn2 ist, und Δn1<Δn2, wobei der Wert von Δn1 von 0,4 % bis 1,3 % reicht, und der Wert von Δn2 von 0,6 % bis 1,5 % reicht;
wobei der Durchmesser des Mittelkernbereichs (10) d1 ist, der äußere Durchmesser des ringförmigen Bereichs (11) d2 ist, der Durchmesser der Belastungszone (5) d3 ist, der äußere Durchmesser der Quarz-Mantelschicht (2) d4 ist, und d1<d2<d3<d4, wobei der Wert von d1 von 4,0 µm bis 5,0 µm reicht, der Wert von d2 von 5,0 µm bis 6,0 µm reicht, der Wert von d3 von 22,0 µm bis 26,0 µm reicht, und der Wert von d4 von 79,0 µm bis 81,0 µm reicht.

2. Polarisationserhaltende optische Faser nach Anspruch 1, wobei das Material der Belastungszone (5) ein mit Bortrioxid dotiertes Quarzmaterial ist, wobei die Konzentration des in der Belastungszone (5) dotierten Bortrioxids von 1 Molprozent bis 3 Molprozent reicht.

3. Polarisationserhaltende optische Faser nach Anspruch 1, wobei der Mittelkernbereich (10) und der ringförmige Bereich (11) beide aus mit Germanium dotiertem Quarzmaterial bestehen und sich die Konzentration des in dem Mittelkernbereich (10) dotierten Germaniums von der in dem ringförmigen Bereich (11) unterscheidet.

4. Polarisationserhaltende optische Faser nach Anspruch 1, wobei die innere Beschichtungsschicht (3) aufweist, in der Reihenfolge von innen nach außen: eine erste innere Beschichtungsschicht (30) und eine zweite innere Beschichtungsschicht (31); wobei die äußere Beschichtungsschicht (4) aufweist, in der Reihenfolge von innen nach außen: eine erste äußere Beschichtungsschicht (40) und eine zweite äußere Beschichtungsschicht (41).

5. Polarisationserhaltende optische Faser nach Anspruch 4, wobei der Modul der ersten inneren Beschichtungsschicht (30) 0,6 Mpa bis 1,2 MPa beträgt, der Modul der zweiten inneren Beschichtungsschicht (31) 1,5 Mpa bis 10 Mpa beträgt, der Modul der ersten äußeren Beschichtungsschicht (40) 450 Mpa bis 650 Mpa beträgt, und der Modul der zweiten äußeren Beschichtungsschicht (41) 1200 Mpa bis 1980 Mpa beträgt.

6. Polarisationserhaltende optische Faser nach Anspruch 4, wobei der Durchmesser der ersten inneren Beschichtungsschicht (30) d5 ist, der Durchmesser der zweiten inneren Beschichtungsschicht (31) d6 ist, der Durchmesser der ersten äußeren Beschichtungsschicht (40) d7 ist, und der Durchmesser der zweiten äußeren Beschichtungsschicht (41) d8 ist, wobei der Wert von d5 von 90,0 µm bis 95,0 µm reicht, der Wert von d6 von 100,0 µm bis 105,0 µm reicht, der Wert von d7 von 110,0 µm bis 115,0 µm reicht, und der Wert von d8 von 127,0 µm bis 133,0 µm reicht.

## Revendications

1. Fibre optique à maintien de polarisation, dans laquelle
la fibre optique à maintien de polarisation comprend, dans l'ordre de l'intérieur vers l'extérieur, un coeur de fibre (1), une couche enveloppe en quartz (2), une couche de revêtement interne (3) et une couche de revêtement externe (4);
la couche enveloppe en quartz (2) est située à la périphérie du coeur de fibre (1), deux zones de contrainte (5) sont prévues entre la couche enveloppe en quartz (2) et le coeur de fibre (1), et les deux zones de contrainte (5) sont réparties symétriquement le long du centre du coeur de fibre (1);
le coeur de fibre (1) comprend, dans l'ordre de l'intérieur vers l'extérieur, une zone de coeur centrale circulaire (10) et au moins une zone annulaire (11) disposée concentriquement avec la zone de coeur centrale (10), et les indices de réfraction de la zone de coeur centrale (10) et de la zone annulaire (11) sont différents;
la couche de revêtement interne (3) et la couche de revêtement externe (4) sont toutes deux d'une structure à double couche, le module de chaque couche de la couche de revêtement interne (3) et de la couche de revêtement externe (4) est différent, et le module de l'intérieur vers l'extérieur augmente séquentiellement;
l'indice de réfraction de la zone de coeur centrale (10) est n1, l'indice de réfraction de la zone annulaire (11) est n2, l'indice de réfraction de la couche enveloppe en quartz (2) est n3, l'indice de réfraction de la zone de coeur centrale (10) par rapport à la couche enveloppe en quartz (2) est Δn1, et l'indice de réfraction de la zone annulaire (11) par rapport à la couche enveloppe en quartz (2) est Δn2, et Δn1 < Δn2, la valeur de Δn1 allant de 0,4 % à 1,3 %, et la valeur de Δn2 allant de 0,6 % à 1,5 %;
le diamètre de la zone de coeur centrale (10) est d1, le diamètre extérieur de la zone annulaire (11) est d2, le diamètre de la zone de contrainte (5) est d3, le diamètre extérieur de la couche enveloppe en quartz (2) est d4, et d1 < d2 < d3 < d4, la valeur de d1 allant de 4,0 µm à 5,0 µm, la valeur de d2 allant de 5,0 µm à 6,0 µm, la valeur de d3 allant de 22,0 µm à 26,0 µm, et la valeur de d4 allant de 79,0 µm à 81,0 µm.

2. Fibre optique à maintien de polarisation selon la revendication 1,
dans laquelle le matériau de la zone de contrainte (5) est un matériau de quartz dopé au trioxyde de bore, la concentration du trioxyde de bore dopé dans la zone de contrainte (5) allant de 1 % mol à 3 % mol.

3. Fibre optique à maintien de polarisation selon la revendication 1,
dans laquelle la zone de coeur centrale (10) et la zone annulaire (11) sont toutes deux réalisées en un matériau de quartz dopé au germanium, et la concentration du germanium dopé dans la zone de coeur centrale (10) est différente de celle dans la zone annulaire (11).

4. Fibre optique à maintien de polarisation selon la revendication 1,
dans laquelle la couche de revêtement interne (3) comprend, dans l'ordre de l'intérieur vers l'extérieur, une première couche de revêtement interne (30) et une seconde couche de revêtement interne (31);
la couche de revêtement externe (4) comprend, dans l'ordre de l'intérieur vers l'extérieur, une première couche de revêtement externe (40) et une seconde couche de revêtement externe (41).

5. Fibre optique à maintien de polarisation selon la revendication 4,
dans laquelle le module de la première couche de revêtement interne (30) est de 0,6 MPa à 1,2 MPa, le module de la seconde couche de revêtement interne (31) est de 1,5 MPa à 10 MPa, le module de la première couche de revêtement externe (40) est de 450 MPa à 650 MPa, et le module de la seconde couche de revêtement externe (41) est de 1200 MPa à 1980 MPa.

6. Fibre optique à maintien de polarisation selon la revendication 4,
dans laquelle le diamètre de la première couche de revêtement interne (30) est d5, le diamètre de la seconde couche de revêtement interne (31) est d6, le diamètre de la première couche de revêtement externe (40) est d7, et le diamètre de la seconde couche de revêtement externe (41) est d8, la valeur de d5 allant de 90,0 µm à 95,0 µm, la valeur de d6 allant de 100,0 µm à 105,0 µm, la valeur de d7 allant de 110,0 µm à 115,0 µm, et la valeur de d8 allant de 127,0 µm à 133,0 µm.
